# EUROPÄISCHE PATENTANMELDUNG

(11) **EP 1 691 511 A1**
(43) Veröffentlichungstag der Anmeldung: **16.08.2006**
(21) Anmeldenummer: 05090023.2
(22) Anmeldetag: 09.02.2005
(51) Int. Cl.: H04L 12/56, H04M 3/436

(54) **Verfahren und Steuerungseinheit zum Aufbauen einer Kommunikationsverbindung zwischen Kommunikationsendgeräten**

(71) Anmelder: SIEMENS AKTIENGESELLSCHAFT, 80333 München (DE)
(72) Erfinder: Böhmer, Bernhard, 14052 Berlin (DE); Hauptvogel, Andreas, 12103 Berlin (DE)

(57) **Zusammenfassung**

Die Erfindung betrifft ein Verfahren zum Aufbauen einer Kommunikationsverbindung (KV) zwischen Kommunikationsendgeräten (KA, KC) in einem paketorientiert arbeitenden Kommunikationsnetz (KN), wobei das Kommunikationsnetz einen ersten Datenspeicher (D1) zum Speichern von ersten Daten aufweist, wobei diese ersten Daten einem von dem Kommunikationsnetz ausführbaren Kommunikations verbindungsaufbaudienst zugeordnet sind, und wobei das Kommunikationsnetz einen zweiten Datenspeicher (D2) zum Speichern von zweiten Daten aufweist, wobei diese zweiten Daten dienstübergreifend für eine Mehrzahl von Diensten anwendbar sind. Bei dem Verfahren wird von einer Aufbausteuerungseinheit (CCA) aus dem ersten Datenspeicher eine Information über eine dem Nutzer des ersten Kommunikationsendgerätes zugeordnete Nutzergruppe und eine für diese Nutzergruppe anzuwendende Verbindungsaufbauregel ausgelesen. Die Information und/oder die Verbindungsaufbauregel werden aus dem zweiten Datenspeicher ausgelesen, wenn diese Information und/oder diese Verbindungsaufbauregel nicht in dem ersten Datenspeicher gespeichert sind. Weiterhin betrifft die Erfindung eine Steuerungseinheit.

## Beschreibung

Die Erfindung betrifft ein Verfahren und eine Steuerungseinheit zum Aufbauen einer Kommunikationsverbindung zwischen Kommunikationsendgeräten in einem paketorientiert arbeitenden Kommunikationsnetz.

Die Datenübertragung in paketorientiert arbeitenden Kommunikationsnetzen wird in Zukunft voraussichtlich weiter an Bedeutung gewinnen. Ein Beispiel für ein derartiges paketorientiert arbeitendes Kommunikationsnetz ist das Internet. Es ist beispielsweise davon auszugehen, dass zukünftig ein beträchtlicher Anteil der weltweit geführten Sprach-Kommunikationsverbindungen auf Basis von IP-Paketen aufgebaut und unterhalten werden ("IP-Telefonverbindungen").

Der Erfindung liegt die Aufgabe zugrunde, ein zuverlässiges und kostengünstig zu realisierendes Verfahren und eine Steuerungseinheit zum Aufbauen von Kommunikationsverbindungen in paketorientiert arbeitenden Kommunikationsnetzen anzugeben.

Diese Aufgabe wird erfindungsgemäß gelöst durch ein Verfahren zum Aufbauen einer Kommunikationsverbindung zwischen Kommunikationsendgeräten in einem paketorientiert arbeitenden Kommunikationsnetz, wobei das Kommunikationsnetz einen ersten Datenspeicher zum Speichern von ersten Daten aufweist, wobei diese ersten Daten einem von dem Kommunikationsnetz ausführbaren Kommunikationsverbindungsaufbaudienst zugeordnet sind, und wobei das Kommunikationsnetz einen zweiten Datenspeicher zum Speichern von zweiten Daten aufweist, wobei diese zweiten Daten dienstübergreifend für eine Mehrzahl von Diensten anwendbar sind, welche von dem Kommunikationsnetz ausführbar sind, wobei bei dem Verfahren von einer Aufbausteuerungseinheit des Kommunikationsnetzes (KN) eine von einem ersten Kommunikationsendgerät stammende Aufbauanforderungsnachricht empfangen wird, von der Aufbausteuerungseinheit aus dem ersten Datenspeicher eine Information über eine dem Nutzer des ersten Kommunikationsendgerätes zugeordnete Nutzergruppe und eine für diese Nutzergruppe anzuwendende Verbindungsaufbauregel ausgelesen werden, wenn diese Information und diese Verbindungsaufbauregel in dem ersten Datenspeicher gespeichert sind, die Information über die dem Nutzer des ersten Kommunikationsendgerätes zugeordnete Nutzergruppe und/oder die für die Nutzergruppe anzuwendende Verbindungsaufbauregel aus dem zweiten Datenspeicher ausgelesen wird, wenn diese Information und/oder diese Verbindungsaufbauregel nicht in dem ersten Datenspeicher gespeichert sind, unter Auswertung der Verbindungsaufbauregel ein Ziel-Kommunikationsendgerät für die Kommunikationsverbindung ermittelt wird, und die Kommunikationsverbindung zwischen dem ersten Kommunikationsendgerät und dem Ziel-Kommunikationsendgerät aufgebaut wird. Bei diesem Verfahren ist vorteilhaft, dass sowohl ein erster Datenspeicher mit dem Kommunikationsverbindungsaufbaudienst zugeordneten (d.h. mit dienstspezifischen) Daten und ein zweiter Datenspeicher mit dienstübergreifenden (d.h. für mehrere verschiedene Dienste anwendbaren bzw. dienstunspezifischen) Daten verwendet wird. Wenn die Information über die dem Nutzer des ersten Kommunikationsendgerätes zugeordnete Nutzergruppe und/oder die für diese Nutzergruppe anzuwendende Verbindungsaufbauregel nicht in dem ersten (dienstspezifischen) Datenspeicher gespeichert ist, dann wird diese Information oder Regel aus dem zweiten (dienstunabhängigen, dienstunspezifischen bzw. dienstübergreifenden) Datenspeicher ausgelesen.

Dies hat den Vorteil, dass die genannte Information oder die Regel nicht notwendigerweise für den Kommunikationsverbindungsaufbaudienst in dem ersten Datenspeicher abgespeichert sein müssen und trotzdem das erfindungsgemäße Verfahren unter Nutzung des zweiten Datenspeichers ablaufen kann. Insbesondere können ein in dem Kommunikationsnetz ggf. bereits vorhandener zweiter Datenspeicher für dienstübergreifende Informationen und Regeln und die in diesem Datenspeicher gespeicherten Daten für das erfindungsgemäße Verfahren verwendet werden. Dadurch ergeben sich wesentliche Vereinfachungen im Bereich der Datenerfassung und Datenspeicherung und damit auch Möglichkeiten zur Kosteneinsparung.

Das erfindungsgemäße Verfahren kann so ausgestaltet sein, dass von der Aufbausteuerungseinheit aus einem der Datenspeicher ausgelesen wird, ob für den Nutzer des ersten Kommunikationsendgerätes eine Berechtigung zum Aufbauen der angeforderten Kommunikationsverbindung vorliegt, und bei nicht vorliegender Berechtigung der Aufbau der Kommunikationsverbindung beendet wird. Dadurch kann vorteilhafterweise sichergestellt werden, dass nur berechtigte Nutzer den Aufbau von Kommunikationsverbindungen im Kommunikationsnetz veranlassen können.

Das erfindungsgemäße Verfahren kann so ablaufen, dass von der Aufbausteuerungseinheit die Aufbauanforderungsnachricht über eine Vermittlungsstelle des Kommunikationsnetzes empfangen wird, und über diese Vermittlungsstelle die Kommunikationsverbindung zwischen dem ersten Kommunikationsendgerät und dem Ziel-Kommunikationsendgerät aufgebaut wird. Dadurch ist lediglich eine Schnittstelle zwischen der Aufbausteuerungseinheit und der Vermittlungsstelle des Kommunikationsnetzes zur Realisierung des erfindungsgemäßen Verfahrens notwendig.

Das erfindungsgemäße Verfahren kann so ablaufen, dass die Information über die dem Nutzer des ersten Kommunikationsendgerätes zugeordnete Nutzergruppe und/oder die für die Nutzergruppe anzuwendende Verbindungsaufbauregel aus dem zweiten Datenspeicher ausgelesen wird, indem diese Information und/oder diese Regel über eine den zweiten Datenspeicher mit dem ersten Datenspeicher verbindende Schnittstelle zu dem ersten Datenspeicher übertragen werden und indem diese Information und/oder diese Regel von dem ersten Datenspeicher zu der Aufbausteuerungseinheit übertragen werden. Dadurch bekommt die Aufbausteuerungseinheit auch im Fall einer zunächst nicht in dem ersten Datenspeicher vorliegenden Information bzw. Regel diese Information und/oder Regel von dem ersten Datenspeicher übermittelt. Die Aufbausteuerungseinheit selbst wird also nicht mit der Suche belastet, in welchem der beiden Datenspeicher die abgefragte Information und/oder Regel abgespeichert ist.

Bei dem erfindungsgemäßen Verfahren kann vorgesehen sein, dass die in dem ersten Datenspeicher und/oder dem zweiten Datenspeicher gespeicherten Daten über einen mit dem ersten Datenspeicher und/oder dem zweiten Datenspeicher verbindbaren Administrationsrechner eingebbar und änderbar sind.

Dabei kann der Administrationsrechner durch das erste Kommunikationsendgerät zu einer Eingabe oder Änderung der in dem ersten Datenspeicher und/oder dem zweiten Datenspeicher gespeicherten Daten angeregt werden.

Das erfindungsgemäße Verfahren kann auch so ablaufen, dass der Administrationsrechner durch ein zur Netzwerkadministration genutztes Endgerät zu einer Eingabe oder Änderung der in dem ersten Datenspeicher und/oder dem zweiten Datenspeicher gespeicherten Daten angeregt wird.

Mit den zuletzt genannten Ausführungsformen des erfindungsgemäßen Verfahrens wird es vorteilhafterweise sowohl einem Nutzer des Kommunikationsendgerätes als auch einem Netzwerkadministrator ermöglicht, Daten in den ersten Datenspeicher und/oder den zweiten Datenspeicher einzugeben bzw. abgespeicherte Daten zu verändern.

Das erfindungsgemäße Verfahren kann vorteilhafterweise so ausgestaltet sein, dass ein zweiter Datenspeicher in Form eines XML-Document-Management-Servers eingesetzt wird. Durch Einsatz eines an sich bekannten XML-Document-Management-Servers lässt sich das erfindungsgemäße Verfahren besonders kostengünstig realisieren, da auf einen bereits bekannten Datenspeicher zurückgegriffen werden kann und keine Entwicklung eines neuen, ausschließlich für das erfindungsgemäße Verfahren vorgesehenen Datenspeichers notwendig ist.

Die oben genannte Aufgabe wird ebenfalls gelöst durch eine Aufbausteuerungseinheit zum Aufbauen einer Kommunikationsverbindung zwischen Kommunikationsendgeräten in einem paketorientiert arbeitenden Kommunikationsnetz, welche mit einem ersten Datenspeicher zum Speichern von ersten Daten zusammenwirkt, wobei diese ersten Daten einem von dem Kommunikationsnetz ausführbaren Kommunikationsverbindungsaufbaudienst zugeordnet sind, mit einem zweiten Datenspeicher zum Speichern von zweiten Daten zusammenwirkt, wobei diese zweiten Daten dienstübergreifend für eine Mehrzahl von Diensten anwendbar sind, welche von dem Kommunikationsnetz ausführbar sind, zum Empfangen einer von einem ersten Kommunikationsendgerät stammenden Aufbauanforderungsnachricht eingerichtet ist, zum Empfangen einer Information über eine dem Nutzer des ersten Kommunikationsendgerätes zugeordnete Nutzergruppe und einer für diese Nutzergruppe anzuwendenden Verbindungsaufbauregel von dem ersten Datenspeicher eingerichtet ist, zum Empfangen der Information über die dem Nutzer des ersten Kommunikationsendgerätes zugeordnete Nutzergruppe und/oder der für die Nutzergruppe anzuwendenden Verbindungsaufbauregel von dem zweiten Datenspeicher eingerichtet ist, wenn diese Information und/oder diese Verbindungsaufbauregel nicht in dem ersten Datenspeicher gespeichert sind, und zum Auswerten der Verbindungsaufbauregel und zur Ermittelung des Ziel-Kommunikationsendgerätes für die Kommunikationsverbindung eingerichtet ist.

Diese Aufbausteuerungseinheit kann eingerichtet sein zum Auslesen der Information, ob für den Nutzer des ersten Kommunikationsendgerätes eine Berechtigung zum Aufbauen der angeforderten Kommunikationsverbindung vorliegt, aus dem ersten Datenspeicher, und zum Beenden des Aufbaus der Kommunikationsverbindung bei nicht vorliegender Berechtigung.

Die Aufbausteuerungseinheit kann eingerichtet sein zum Empfangen der Aufbauanforderungsnachricht über eine Vermittlungsstelle des Kommunikationsnetzes und zum Aufbauen der Kommunikationsverbindung zwischen dem ersten Kommunikationsendgerät und dem Ziel-Kommunikationsendgerät über diese Vermittlungsstelle.

Die Aufbausteuerungseinheit kann mit einem zweiten Datenspeicher in Form eines XML-Document-Management-Servers zusammenwirken.

Bei der vorstehend genannten Aufbausteuerungseinheit ergeben sich Vorteile, die ähnlich den Vorteilen sind, welche zuvor im Zusammenhang mit dem Verfahren zum Aufbau einer Kommunikationsverbindung beschrieben wurden.

Zur weiteren Erläuterung der Erfindung ist in
Figur 1 ein Ausführungsbeispiel eines Kommunikationsnetzes mit einer Aufbausteuerungseinheit, in
Figur 2 ein beispielhafter Ablauf des erfindungsgemäßen Verfahrens anhand eines Nachrichtenflusses und in
Figur 3 ein weiterer beispielhafter Ablauf des erfindungsgemäßen Verfahrens anhand eines Nachrichtenflusses dargestellt.

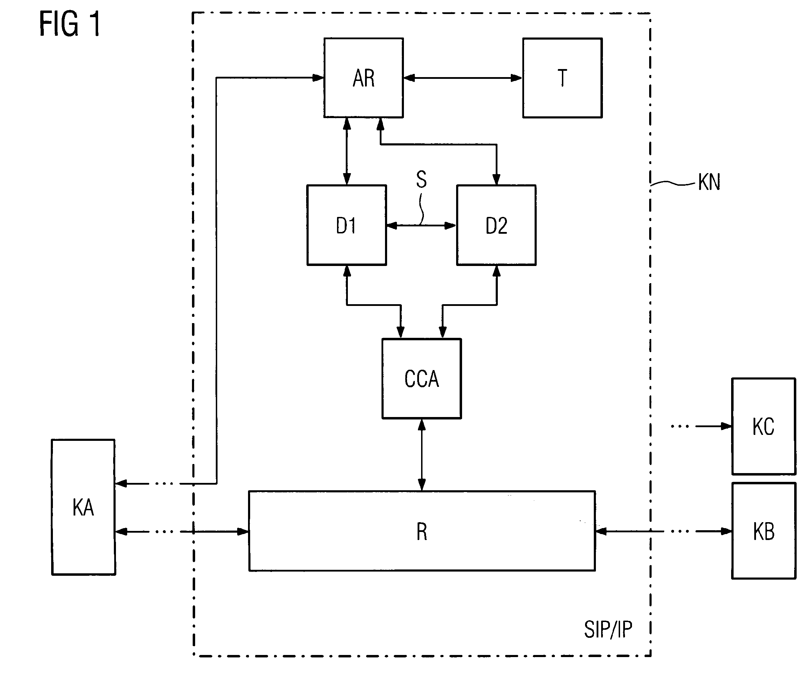

In Figur 1 ist auf der linken Seite ein erstes Kommunikationsendgerät KA dargestellt, bei dem es sich im Ausführungsbeispiel um ein Mobiltelefon oder um einen Palmtop oder einen tragbaren Rechner mit Mobilfunkschnittstelle handeln kann. Das erste Kommunikationsendgerät KA ist (über nicht dargestellte Sende- und Empfangseinheiten) mit einem paketorientiert arbeitenden Kommunikationsnetz KN verbunden. Im Ausführungsbeispiel handelt es sich bei dem Kommunikationsnetz um ein GPRS- oder UMTS-Mobilfunknetz. Das erste Kommunikationsendgerät KA ist über eine Vermittlungsstelle R (Router) mit einer Aufbausteuerungseinheit CCA verbunden (CCA = Call Control Application). Diese Aufbausteuerungseinheit CCA kann sowohl in Form einer eigens für diesen Zweck vorgesehenen elektronischen Schaltung als auch in Form eines Rechners mit entsprechendem Softwareprogramm realisiert sein. Die Aufbausteuerungseinheit CCA steuert in dem Kommunikationsnetz KN den Aufbau von Kommunikationsverbindungen von einem Start-Kommunikationsendgerät (im Ausführungsbeispiel ist das das erste Kommunikationsendgerät KA) zu einem Ziel-Kommunikationsendgerät. Im Ausführungsbeispiel sind beispielhaft zwei Ziel-Kommunikationsendgeräte dargestellt: das erste Ziel-Kommunikationsendgerät KB und das zweite Ziel-Kommunikationsendgerät KC. Bei dem ersten Ziel-Kommunikationsendgerät KB und bei dem zweiten Ziel-Kommunikationsendgerät KC kann es sich jeweils auch um ein Mobiltelefon oder um einen Palmtop oder einen tragbaren Rechner mit Mobilfunkschnittstelle handeln.

Die Aufbausteuerungseinheit CCA ist mit einem ersten Datenspeicher D1 und mit einem zweiten Datenspeicher D2 verbunden. Über eine den ersten Datenspeicher D1 mit dem zweiten Datenspeicher D2 verbindende Schnittstelle S können Daten zwischen den beiden Datenspeichern ausgetauscht werden.

Sowohl der erste Datenspeicher D1 als auch der zweite Datenspeicher D2 ist mit einem Administrationsrechner AR verbunden; mittels des Administrationsrechners AR können Daten in die Datenspeicher eingeschrieben werden bzw. können in den Datenspeichern abgespeicherte Daten geändert werden. Ein Zugriff auf den Administrationsrechner AR ist sowohl über das erste Kommunikationsendgerät KA als auch über ein Terminal T möglich. Mittels des ersten Kommunikationsendgerätes KA kann der Endgerätenutzer (Mobilfunkkunde) die in dem ersten Datenspeicher D1 und/oder dem zweiten Datenspeicher D2 abgespeicherten Daten administrieren (d. h. eingeben, verändern oder löschen); mittels des Terminals T kann ein Netzwerkbetreiber des Kommunikationsnetzes KN die in dem ersten Datenspeicher D1 und/oder dem zweiten Datenspeicher D2 gespeicherten Daten administrieren.

In dem ersten Datenspeicher D1 sind erste Daten abgespeichert, welche dem von dem Kommunikationsnetz ausführbaren Kommunikationsverbindungsaufbaudienst zugeordnet sind. In dem ersten Datenspeicher D1 sind also Daten abgespeichert, welche zum Aufbauen einer Kommunikationsverbindung mittels der Aufbausteuerungseinheit CCA vorgesehen sind. Diese ersten Daten umfassen Gruppendaten, Berechtigungsdaten und Verbindungsaufbauregeln.

In diesem Ausführungsbeispiel werden insbesondere die Gruppendaten, Berechtigungsdaten und Verbindungsaufbauregeln betrachtet, die einem bestimmten Mobilfunknutzer zugeordnet sind, welcher durch die symbolische Telefonnummer 12345 gekennzeichnet ist. In diesem Ausführungsbeispiel ist das der Mobilfunknutzer, zu dem die Kommunikationsverbindung aufgebaut werden soll. Dieser Mobilfunknutzer nutzt das erste Ziel-Kommunikationsendgerät KB und das zweite Ziel-Kommunikationsendgerät KC. Die Gruppendaten, Berechtigungsdaten und Verbindungsaufbauregeln sind also nutzerbezogen in dem ersten Datenspeicher D1 abgespeichert; d. h. für den Mobilfunknutzer mit der Telefonnummer 12345 sind zugeordnete Gruppendaten, Berechtigungsdaten und Verbindungsaufbauregeln in dem ersten Datenspeicher D1 abgespeichert. Der Mobilfunknutzer mit der Telefonnummer 12345 wird im Folgenden auch als "Kommunikationsziel" bezeichnet.

Die Gruppendaten enthalten die Information, welche Kommunikationsendgeräte bzw. welche Nutzer von Kommunikationsendgeräten zu bestimmten Nutzergruppen zugeordnet sind. Beispiele für derartige Nutzergruppen sind eine Nutzergruppe "Familie" (welche alle Familienmitglieder des obengenannten Mobilfunknutzers als Mitglieder umfasst) oder eine Nutzergruppe "Freunde" (welche als Gruppenmitglieder alle diejenigen Personen umfasst, welche der obengenannte Mobilfunknutzer zu seinen Freunden zählt).

In den Berechtigungsdaten ist die Information abgespeichert, ob bestimmte Nutzer von Kommunikationsendgeräten eine Berechtigung zum Aufbauen von Kommunikationsverbindungen zu dem Mobilfunknutzer mit der Telefonnummer 12345 besitzen. Derartige Berechtigungsdaten werden gelegentlich auch als "Black/White-List" bzw. als "schwarze Liste" oder als "weiße Liste" bezeichnet. Dabei sind in der "schwarzen Liste" diejenigen Nutzer verzeichnet, welche keine Berechtigung zum Aufbauen von bestimmten Kommunikationsverbindungen zu dem Mobilfunknutzer mit der Telefonnummer 12345 besitzen; in der "weißen Liste" sind Nutzer aufgelistet, welche eine derartige Berechtigung besitzen. Die Berechtigungen werden von dem Mobilfunknutzer mit der Telefonnummer 12345 vergeben. In den Berechtigungsdaten werden die berechtigten Nutzer bzw. die nichtberechtigten Nutzer beispielsweise durch Angabe einer Adressinformation beschrieben, z.B. durch die Angabe ihrer Mobilfunkrufnummer MSISDN oder durch Angabe ihrer SIP-Adresse. Da z.B. die Mobilfunkrufnummer MSISDN üblicherweise während des Betriebs eines Mobilfunkendgeräts mittels einer SIM-Karte zu diesem Mobilfunkendgerät zugeordnet ist, sind in den Berechtigungsdaten auch Informationen über berechtigte oder nichtberechtigte Kommunikationsendgeräte abgespeichert.

In den Verbindungsaufbauregeln sind Informationen enthalten, auf welche Art und Weise Kommunikationsverbindungen zu einem gewünschten Kommunikationspartner (im Ausführungsbeispiel zu dem Mobilfunknutzer mit der Telefonnummer 12345) aufzubauen sind. Eine solche Regel könnte beispielsweise lauten:
"Wenn eine Kommunikationsverbindung zu dem Endgerätenutzer mit der Telefonnummer 12345 aufgebaut werden soll, dann ist diese Kommunikationsverbindung zwischen 8 und 16 Uhr zu dem ersten Ziel-Kommunikationsendgerät KB und zwischen 16 und 23 Uhr zu dem zweiten Ziel-Kommunikationsendgerät KC aufzubauen. Zwischen 23 Uhr und 8 Uhr ist die Kommunikationsverbindung zu einem Anrufbeantworter aufzubauen." (Der Anrufbeantworter ist ein nicht dargestelltes drittes Ziel-Kommunikationsendgerät.)

In dem zweiten Datenspeicher D2 sind ebenfalls Gruppendaten, Berechtigungsdaten und Verbindungsaufbauregeln abgespeichert, welche (in diesem Ausführungsbeispiel) dem Mobilfunknutzer mit der Telefonnummer 12345 zugeordnet sind. Im Unterschied zu den in dem ersten Datenspeicher D1 abgespeicherten Daten bzw. Regeln sind die in dem zweiten Datenspeicher D2 abgespeicherten Gruppendaten, Berechtigungsdaten bzw. Verbindungsaufbauregeln jedoch nicht dem mittels der Aufbausteuerungseinheit CCA realisierten Kommunikationsverbindungsaufbaudienst zugeordnet. Die in dem zweiten Datenspeicher D2 abgespeicherten Daten bzw. Regeln sind vielmehr mehreren (oder sogar allen) in dem Kommunikationsnetz KN angebotenen Diensten zugeordnet. Solche weiteren, mittels des Kommunikationsnetzes KN ausführbaren Dienste können beispielsweise der als solcher bekannte Push-To-Talk-Dienst oder der ebenfalls als solcher bekannte Präsenzdienst (Presenceservice) sein.

Der zweite Datenspeicher D2 ist in Form eines XML-Document-Management-Servers realisiert, wie er beispielsweise aus der Schrift "Group Management Architecture, Draft Version 1.0" (18. November 2004) der Organisation Open Mobile Alliance bekannt ist.

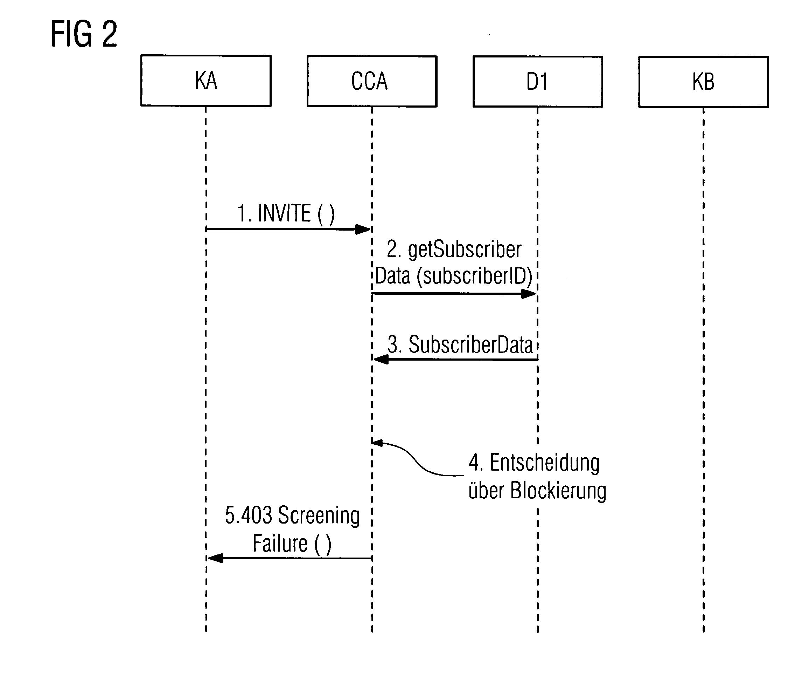

In Figur 2 ist ein beispielhafter Ablauf des erfindungsgemäßen Verfahrens mittels eines Nachrichtenflusses dargestellt.

In Figur 2 ist dargestellt, wie das erste Kommunikationsendgerät KA eine Aufbauanforderungsnachricht (Pfeil 1: INVITE()) an das Kommunikationsnetz KN absendet. Diese Aufbauanforderungsnachricht wird über die in Figur 1 dargestellte Vermittlungsstelle R zu der Aufbausteuerungseinheit CCA übertragen.

Die Aufbausteuerungseinheit CCA empfängt die Aufbauanforderungsnachricht. Die Aufbauanforderungsnachricht enthält die Information, dass eine Kommunikationsverbindung in Form eines IP-Telefonanrufs (d. h. eine IP-Sprachdatenverbindung) von dem ersten Kommunikationsendgerät KA zu dem Endgerätenutzer mit der Telefonnummer 12345 aufgebaut werden soll.

Daraufhin sendet die Aufbausteuerungseinheit CCA eine Abfragenachricht (Pfeil 2: getSubscriberData (subscriberID)) an den ersten Datenspeicher D1. Als "subscriberID" dient die Telefonnummer 12345. Die Abfragenachricht enthält die Information, dass aus dem ersten Datenspeicher D1 die dem Kommunikationsziel zugeordneten Gruppendaten, Berechtigungsdaten und Verbindungsaufbauregeln auszulesen und an die Aufbausteuerungseinheit CCA zu übermitteln sind. Diese Daten und Regeln werden daraufhin ausgelesen und mittels einer Datennachricht (Pfeil 3: SubscriberData) vom ersten Datenspeicher D1 an die Aufbausteuerungseinheit CCA übermittelt.

Im Ausführungsbeispiel enthalten die Berechtigungsdaten die Information, dass der Nutzer des ersten Kommunikationsendgerätes KA nicht berechtigt ist, eine Kommunikationsverbindung zu dem Teilnehmer mit der Telefonnummer 12345 aufzubauen. Der Nutzer des ersten Kommunikationsendgerätes KA befindet sich nämlich auf der "Schwarzen Liste", welche von dem Nutzer mit der Telefonnummer 12345 administriert wird. Anhand dieser Berechtigungsdaten erkennt die Aufbausteuerungseinheit CCA, dass für den Nutzer des ersten Kommunikationsendgerätes KA keine Berechtigung zum Aufbauen der angeforderten Kommunikationsverbindung zu dem Nutzer mit der Telefonnummer 12345 vorliegt. Daraufhin entscheidet die Aufbausteuerungseinheit CCA, dass der angeforderte Ruf blockiert wird, d. h. dass die Kommunikationsverbindung nicht aufgebaut wird (Box 4: Entscheidung über Blockierung). Daraufhin sendet die Aufbausteuerungseinheit CCA eine Fehlernachricht (Pfeil 5: 403 Screening Failure ()) an das erste Kommunikationsendgerät KA zurück, um dieses über das Blockieren des Rufes bzw. über den Abbruch des Aufbaus der Kommunikationsverbindung zu informieren. Daraufhin wird das Verfahren zum Aufbauen der Kommunikationsverbindung beendet.

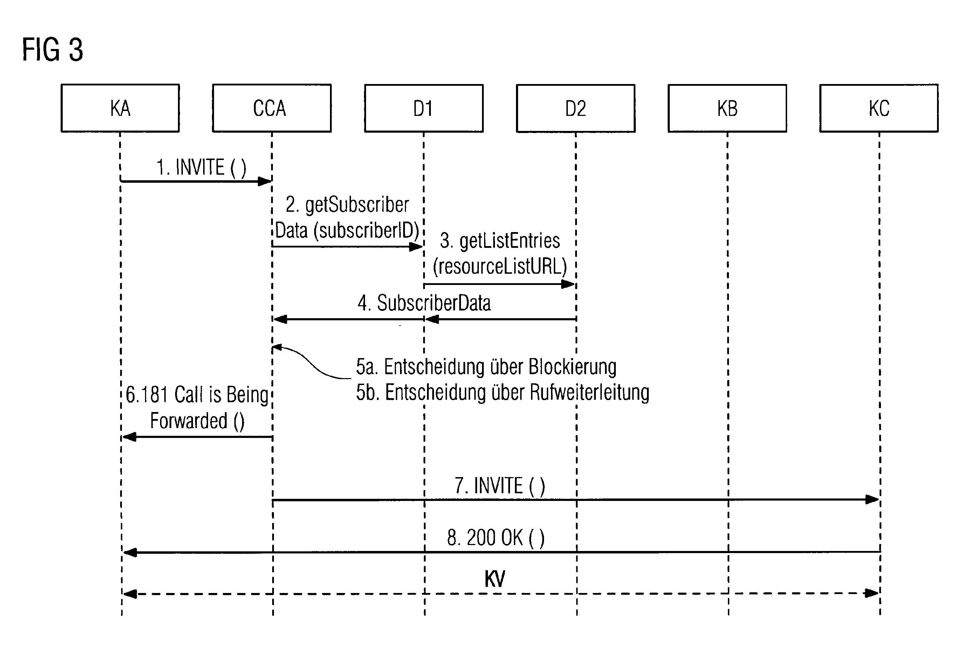

In Figur 3 ist ein weiteres Ausführungsbeispiel eines Verfahrensablaufes zum Aufbauen einer Kommunikationsverbindung dargestellt. Die ersten beiden Verfahrensschritte (Pfeil 1: INVITE (); Pfeil 2: getSubscriberData (subscriberID)) entsprechen dabei den bereits im Zusammenhang mit der Figur 2 erläuterten zwei ersten Verfahrensschritten. Im Unterschied zu dem im Zusammenhang mit der Figur 2 beschriebenen Verfahren sind bei dem Verfahren nach der Figur 3 jedoch in dem ersten Datenspeicher D1 nicht die abgefragten Gruppendaten gespeichert. Vielmehr ist in dem Datenspeicher D1 lediglich ein Verweis (eine Referenz) auf in dem zweiten Datenspeicher D2 gespeicherte Gruppendaten gespeichert. Der Nutzer mit der Telefonnummer 12345 hat nämlich die in dem ersten Datenspeicher D1 und in dem zweiten Datenspeicher D2 abgespeicherten Daten derart administriert, dass für alle von ihm in dem Kommunikationsnetz KN genutzten Dienste einheitliche Gruppendaten verwendet werden; diese Gruppendaten sind in dem zweiten Datenspeicher D2 dienstübergreifend abgespeichert.

Aufgrund des in dem ersten Datenspeicher D1 abgespeicherten Verweises (der im Ausführungsbeispiel mit "resourceListURL" bezeichnet ist), sendet der erste Datenspeicher D1 eine Datenabfragenachricht (Pfeil 3: getListEntries (resourceListURL)) über die Schnittstelle S an den zweiten Datenspeicher D2. Aufgrund dieser Datenabfragenachricht werden aus dem zweiten Datenspeicher D2 die entsprechenden Gruppendaten ausgelesen und mittels einer weiteren Datennachricht (Pfeil 4: SubscriberData) von dem zweiten Datenspeicher D2 über die Schnittstelle S zu dem ersten Datenspeicher D1 übertragen. Danach wird die Datennachricht von dem ersten Datenspeicher D1 zu der Aufbausteuerungseinheit CCA übertragen. Die in dem ersten Datenspeicher abgespeicherten Berechtigungsdaten und Verbindungsaufbauregeln werden ebenfalls von dem ersten Datenspeicher D1 zu der Aufbausteuerungseinheit CCA übermittelt (dies ist in der Figur 3 nicht gesondert dargestellt).

Die Aufbausteuerungseinheit CCA überprüft nun, ob für den Nutzer des ersten Kommunikationsendgerätes KA eine Berechtigung zum Aufbauen der angeforderten Kommunikationsverbindung vorliegt (Schritt 5a: Entscheidung über Blockierung). Im Ausführungsbeispiel soll angenommen werden, dass mit den Berechtigungsdaten eine Information über eine vorliegende Berechtigung übertragen wurde, weil der Nutzer des ersten Telekommunikationsendgerätes KA auf der "weißen Liste" eingetragen ist. Daher blockiert die Aufbausteuerungseinheit CCA den Ruf nicht, d. h. das Verfahren zum Aufbauen der Kommunikationsverbindung läuft weiter ab.

Weiterhin erkennt die Aufbausteuerungseinheit CCA aus den Gruppendaten, dass der Nutzer des ersten Kommunikationsendgerätes KA zu der Nutzergruppe "Freunde" gehört. Daraufhin wählt die Aufbausteuerungseinheit CCA aus den vorliegenden Verbindungsaufbauregeln die für die Nutzergruppe "Freunde" anzuwendende Verbindungsaufbauregel aus. (Alternativ kann die Aufbausteuerungseinheit CCA auch aus dem ersten Datenspeicher lediglich die für die Benutzergruppe "Freunde" anzuwendende Verbindungsaufbauregel auslesen.) In diesem Ausführungsbeispiel soll angenommen werden, dass in der der Nutzergruppe "Freunde" zugeordneten Verbindungsaufbauregel die Information abgespeichert ist, dass die von den "Freunden" initiierten Kommunikationsverbindungen zwischen 8 und 16 Uhr zu dem ersten Ziel-Kommunikationsendgerät KB, zwischen 16 und 23 Uhr zu dem zweiten Ziel-Kommunikationsendgerät KC und zwischen 23 Uhr und 8 Uhr zu einem Anrufbeantworter aufzubauen sind. (Der Anrufbeantworter ist in den Figuren nicht dargestellt.) Die Aufbausteuerungseinheit CCA bestimmt die aktuelle Uhrzeit (im Ausführungsbeispiel sei es 17 Uhr) und entscheidet, dass die Kommunikationsverbindung zu dem zweiten Ziel-Kommunikationsendgerät KC aufzubauen ist (Schritt 5b: Entscheidung über Rufweiterleitung).

Nach dieser Auswertung der Verbindungsaufbauregel baut die Aufbausteuerungseinheit CCA die Kommunikationsverbindung zwischen dem ersten Kommunikationsendgerät KA und dem zweiten Ziel-Kommunikationsendgerät KC auf, in dem sie über die Vermittlungsstelle R zwei Nachrichten absendet. Die Aufbausteuerungseinheit CCA übermittelt eine Informationsnachricht (Pfeil 6: 181 call is Being Forwarded ()) an das erste Kommunikationsendgerät KA. Damit wird das erste Kommunikationsendgerät KA darüber informiert, dass die Kommunikationsverbindung zu dem zweiten Ziel-Kommunikationsendgerät KC hin aufgebaut wird. Weiterhin überträgt die Aufbausteuerungseinheit CCA eine weitere Aufbauanforderungsnachricht (Pfeil 7: INVITE ()) an das zweite Ziel-Kommunikationsendgerät KC. Das zweite Ziel-Kommunikationsendgerät KC reagiert mit dem Senden einer Antwortnachricht (Pfeil 8: 200 OK ()) an das erste Kommunikationsendgerät KA. Daraufhin wird auf übliche Art und Weise die angeforderte Sprach-Kommunikationsverbindung KV zwischen dem ersten Kommunikationsendgerät KA und dem zweiten Ziel-Kommunikationsendgerät KC aufgebaut. Diese Kommunikationsverbindung KV ist der Figur 3 mittels eines strichlierten Pfeils symbolisiert.

Die in Figuren 2 und 3 dargestellten Nachrichtenflüsse zeigen Nachrichten, welche auf dem SIP-Protokoll (SIP = Session Initiation Protocol) basieren. Ähnliche Nachrichten können jedoch auch unter Verwendung von anderen Signalisierungsprotokollen übermittelt werden, beispielsweise unter Verwendung des bei intelligenten Netzen anwendbaren Signalisierungsprotokolls INAP (INAP = Intelligent Network Application Part). Bei dem beschriebenen Verfahren können mittels der Datenpakete beliebige Daten übertragen werden, die Übertragung ist nicht auf Sprachdaten beschränkt.

Es wurde ein Verfahren und eine Aufbausteuerungseinheit zum Aufbauen von Kommunikationsverbindungen in paketorientierten Kommunikationsnetzen beschrieben. Dabei ist besonders vorteilhaft, dass ein zweiter Datenspeicher verwendet wird, in dem dienstübergreifende bzw. dienstunabhängige Gruppendaten, Berechtigungsdaten und/oder Verbindungsaufbauregeln abgespeichert sind. Als ein derartiger zweiter Datenspeicher kann beispielsweise mit Vorteil ein als solcher bekannter XML-Document-Management-Server eingesetzt werden. Die in diesem Server gespeicherten Daten werden auch zum Aufbau der Kommunikationsverbindung herangezogen. Mittels der als solches bereits bekannten Schnittstellen und Datenadministrationsmöglichkeiten dieses Servers kann das beschriebene Verfahren schnell und kostengünstig realisiert werden. Außerdem können vorteilhafterweise die in dem zweiten Datenspeicher gegebenenfalls für andere Dienste bereits abgespeicherten Daten auch zum Aufbauen der Kommunikationsverbindung verwendet werden, so dass ein Anlegen und Pflegen von neuen Daten (welche ausschließlich zum Aufbauen der Kommunikationsverbindung vorgesehen sind) nicht notwendig ist. Dadurch lässt sich das Verfahren zum Aufbauen der Kommunikationsverbindung auf eine für den Kommunikationsteilnehmer und den Netzwerkadministrator bequeme und kostengünstige Art und Weise realisieren.

## Patentansprüche

1. Verfahren zum Aufbauen einer Kommunikationsverbindung (KV) zwischen Kommunikationsendgeräten (KA, KC) in einem paketorientiert arbeitenden Kommunikationsnetz (KN),
- wobei das Kommunikationsnetz (KN) einen ersten Datenspeicher (D1) zum Speichern von ersten Daten aufweist, wobei diese ersten Daten einem von dem Kommunikationsnetz ausführbaren Kommunikationsverbindungsaufbaudienst zugeordnet sind, und
- wobei das Kommunikationsnetz (KN) einen zweiten Datenspeicher (D2) zum Speichern von zweiten Daten aufweist, wobei diese zweiten Daten dienstübergreifend für eine Mehrzahl von Diensten anwendbar sind, welche von dem Kommunikationsnetz (KN) ausführbar sind, wobei bei dem Verfahren
- von einer Aufbausteuerungseinheit (CCA) des Kommunikationsnetzes (KN) eine von einem ersten Kommunikationsendgerät (KA) stammende Aufbauanforderungsnachricht (1) empfangen wird,
- von der Aufbausteuerungseinheit (CCA) aus dem ersten Datenspeicher (D1) eine Information über eine dem Nutzer des ersten Kommunikationsendgerätes (KA) zugeordnete Nutzergruppe und eine für diese Nutzergruppe anzuwendende Verbindungsaufbauregel ausgelesen werden, wenn diese Information und diese Verbindungsaufbauregel in dem ersten Datenspeicher (D1) gespeichert sind,
- die Information über die dem Nutzer des ersten Kommunikationsendgerätes zugeordnete Nutzergruppe und/oder die für die Nutzergruppe anzuwendende Verbindungsaufbauregel aus dem zweiten Datenspeicher (D2) ausgelesen wird, wenn diese Information und/oder diese Verbindungsaufbauregel nicht in dem ersten Datenspeicher (D1) gespeichert sind,
- unter Auswertung der Verbindungsaufbauregel ein Ziel-Kommunikationsendgerät (KC) für die Kommunikationsverbindung (KV) ermittelt wird, und
- die Kommunikationsverbindung (KV) zwischen dem ersten Kommunikationsendgerät (KA) und dem Ziel-Kommunikationsendgerät (KC) aufgebaut wird.

2. Verfahren nach Anspruch 1,
**dadurch gekennzeichnet, dass**
- von der Aufbausteuerungseinheit (CCA) aus einem der Datenspeicher (D1, D2) ausgelesen wird, ob für den Nutzer des ersten Kommunikationsendgerätes (KA) eine Berechtigung zum Aufbauen der angeforderten Kommunikationsverbindung (KV) vorliegt, und
- bei nichtvorliegender Berechtigung der Aufbau der Kommunikationsverbindung (KV) beendet wird.

3. Verfahren nach Anspruch 1 oder 2,
**dadurch gekennzeichnet, dass**
- von der Aufbausteuerungseinheit (CCA) die Aufbauanforderungsnachricht (1) über eine Vermittlungsstelle (R) des Kommunikationsnetzes (KN) empfangen wird, und
- über diese Vermittlungsstelle (R) die Kommunikationsverbindung (KV) zwischen dem ersten Kommunikationsendgerät (KA) und dem Ziel-Kommunikationsendgerät (KC) aufgebaut wird.

4. Verfahren nach einem der vorhergehenden Ansprüche,
**dadurch gekennzeichnet, dass**
- die Information über die dem Nutzer des ersten Kommunikationsendgerätes (KA) zugeordnete Nutzergruppe und/oder die für die Nutzergruppe anzuwendende Verbindungsaufbauregel aus dem zweiten Datenspeicher (D2) ausgelesen wird, indem diese Information und/oder diese Regel über eine den zweiten Datenspeicher (D2) mit dem ersten Datenspeicher (D1) verbindende Schnittstelle (S) zu dem ersten Datenspeicher (D1) übertragen werden und indem diese Information und/oder diese Regel von dem ersten Datenspeicher (D1) zu der Aufbausteuerungseinheit (CCA) übertragen werden.

5. Verfahren nach einem der vorhergehenden Ansprüche,
**dadurch gekennzeichnet, dass**
- die in dem ersten Datenspeicher (D1) und/oder dem zweiten Datenspeicher (D2) gespeicherten Daten über einen mit dem ersten Datenspeicher und/oder dem zweiten Datenspeicher verbindbaren Administrationsrechner (AR) eingebbar und änderbar sind.

6. Verfahren nach Anspruch 5,
**dadurch gekennzeichnet, dass**
- der Administrationsrechner (AR) durch das erste Kommunikationsendgerät (KA) zu einer Eingabe oder Änderung der in dem ersten Datenspeicher (D1) und/oder dem zweiten Datenspeicher (D2) gespeicherten Daten angeregt wird.

7. Verfahren nach Anspruch 5 oder 6,
**dadurch gekennzeichnet, dass**
- der Administrationsrechner (AR) durch ein zur Netzwerkadministration genutztes Endgerät (T) zu einer Eingabe oder Änderung der in dem ersten Datenspeicher (D1) und/oder dem zweiten Datenspeicher (D2) gespeicherten Daten angeregt wird.

8. Verfahren nach einem der vorhergehenden Ansprüche,
**dadurch gekennzeichnet, dass**
- ein zweiter Datenspeicher (D2) in Form eines XML-Document-Management-Servers eingesetzt wird.

9. Aufbausteuerungseinheit (CCA) zum Aufbauen einer Kommunikationsverbindung (KV) zwischen Kommunikationsendgeräten (KA, KC) in einem paketorientiert arbeitenden Kommunikationsnetz (KN), welche
- mit einem ersten Datenspeicher (D1) zum Speichern von ersten Daten zusammenwirkt, wobei diese ersten Daten einem von dem Kommunikationsnetz (KN) ausführbaren Kommunikationsverbindungsaufbaudienst zugeordnet sind,
- mit einem zweiten Datenspeicher (D2) zum Speichern von zweiten Daten zusammenwirkt, wobei diese zweiten Daten dienstübergreifend für eine Mehrzahl von Diensten anwendbar sind, welche von dem Kommunikationsnetz (KN) ausführbar sind,
- zum Empfangen einer von einem ersten Kommunikationsendgerät (KA) stammenden Aufbauanforderungsnachricht (1) eingerichtet ist,
- zum Empfangen einer Information über eine dem Nutzer des ersten Kommunikationsendgerätes (KA) zugeordnete Nutzergruppe und einer für diese Nutzergruppe anzuwendenden Verbindungsaufbauregel von dem ersten Datenspeicher (D1) eingerichtet ist,
- zum Empfangen der Information über die dem Nutzer des ersten Kommunikationsendgerätes (KA) zugeordnete Nutzergruppe und/oder der für die Nutzergruppe anzuwendenden Verbindungsaufbauregel von dem zweiten Datenspeicher (D2) eingerichtet ist, wenn diese Information und/oder diese Verbindungsaufbauregel nicht in dem ersten Datenspeicher (D1) gespeichert sind, und
- zum Auswerten der Verbindungsaufbauregel und zur Ermittelung des Ziel-Kommunikationsendgerätes (KC) für die Kommunikationsverbindung (KV) eingerichtet ist.

10. Aufbausteuerungseinheit nach Anspruch 9,
**dadurch gekennzeichnet, dass**
diese Aufbausteuerungseinheit eingerichtet ist
- zum Auslesen der Information, ob für den Nutzer des ersten Kommunikationsendgerätes (KA) eine Berechtigung zum Aufbauen der angeforderten Kommunikationsverbindung (KV) vorliegt, aus dem ersten Datenspeicher (D1), und
- zum Beenden des Aufbaus der Kommunikationsverbindung (KV) bei nichtvorliegender Berechtigung.

11. Aufbausteuerungseinheit nach Anspruch 9 oder 10,
**dadurch gekennzeichnet, dass**
diese Aufbausteuerungseinheit eingerichtet ist
- zum Empfangen der Aufbauanforderungsnachricht (1) über eine Vermittlungsstelle (R) des Kommunikationsnetzes (KN), und
- zum Aufbauen der Kommunikationsverbindung (KV) zwischen dem ersten Kommunikationsendgerät (KA) und dem Ziel-Kommunikationsendgerät (KC) über diese Vermittlungsstelle (R).

12. Aufbausteuerungseinheit nach einem der Ansprüche 9 bis 11,
**dadurch gekennzeichnet, dass**
- die Aufbausteuerungseinheit (CCA) mit einem zweiten Datenspeicher (D2) in Form eines XML-Document-Management-Servers zusammenwirkt.
